# DEMANDE DE BREVET EUROPEEN

(11) **EP 2 063 263 A2**
(43) Date de publication de la demande: **27.05.2009**
(21) Numéro de dépôt: 08016177.1
(22) Date de dépôt: 15.09.2008
(51) Int. Cl.: G01N 27/28, G01N 27/38, G01N 27/40

(54) **Unité de cartouche d'électrolyte pour sonde électrochimique**

(30) Priorité: 14.11.2007 CH 17592007
(71) Demandeur: Hach Ultra Analytics SA, 2047 Marin-Epagnier (CH)
(72) Inventeur: Delessert, Yannick, 1213 Onex (CH); Rosset, Daniel, 1255 Veyrier (CH); Stehlé, Gérard, 74140 Machilly (FR); Hide, James, 1212 Grand-Lancy (CH); Hediger, Serge, 1004 Lausanne (CH)
(74) Mandataire: Micheli & Cie SA

(57) **Abrégé**

Une unité de cartouche pour une sonde électrochimique comprend :
- une cartouche (2) pré-remplie d'électrolyte, comprenant une première extrémité fermée par une membrane sélectivement perméable (7), une deuxième extrémité (6) et des moyens (11) de fixation à la sonde électrochimique (24),
- un organe de support (3) auquel est fixée la cartouche (2) de manière amovible,
- des moyens (4, 20) de fermeture de la deuxième extrémité (6) de la cartouche (2), ces moyens de fermeture (4, 20) pouvant être ouverts par un utilisateur pour permettre la fixation de la cartouche (2) à la sonde électrochimique (24) puis le détachement de la cartouche (2) de l'organe de support (3).

## Description

La présente invention concerne le domaine des sondes électrochimiques. De telles sondes servent à détecter la présence et mesurer la quantité de substances déterminées dans un échantillon fluide. Il existe notamment des sondes électrochimiques pour mesurer la pression partielle ou la concentration d'un gaz, tel que l'oxygène, l'hydrogène ou l'ozone, dans un liquide ou un mélange gazeux.

Une sonde électrochimique comprend généralement des électrodes polarisées, cathode et anode, dont l'une fait saillie à une extrémité de la sonde où elle est en appui contre une membrane sélectivement perméable à la substance à détecter, c'est-à-dire une membrane qui laisse passer ladite substance mais ne laisse pas passer ou laisse moins facilement passer les autres substances du fluide à analyser. La membrane ferme un logement dans lequel se trouve l'extrémité de la sonde et qui est rempli d'un électrolyte. Un film d'électrolyte est interposé entre ladite électrode faisant saillie et la membrane. L'autre électrode est également en contact avec l'électrolyte. La face extérieure de la membrane est en contact avec l'échantillon fluide à analyser. La substance à détecter diffuse à travers la membrane en réponse à une différence de pression des deux côtés de la membrane et participe à une réaction électrochimique qui produit un courant électrique entre les électrodes. L'intensité de ce courant électrique est fonction de la quantité de la substance dans le fluide.

De telles sondes électrochimiques nécessitent un entretien régulier. En effet, l'électrolyte et la membrane se détériorent avec le temps et doivent donc être changés périodiquement. Lors du remplacement de l'électrolyte, l'utilisateur doit veiller particulièrement à éviter tout contact entre sa peau et l'électrolyte. Ce dernier est en effet un produit caustique. L'opération de transvasement de l'électrolyte de la bouteille du fournisseur dans le logement précité de la sonde est, pour cette raison, une opération délicate.

La présente invention vise à fournir une unité de cartouche pour une sonde électrochimique qui, notamment, permette de réduire les risques en terme de santé de l'utilisateur liés au remplacement de l'électrolyte.

A cette fin est prévue une unité de cartouche pour une sonde électrochimique, comprenant :
- une cartouche pré-remplie d'électrolyte, comprenant une première extrémité fermée par une membrane sélectivement perméable, une deuxième extrémité et des moyens de fixation à la sonde électrochimique,
- un organe de support auquel est fixée la cartouche de manière amovible,
- des moyens de fermeture de la deuxième extrémité de la cartouche, ces moyens de fermeture pouvant être ouverts par un utilisateur pour permettre la fixation de la cartouche à la sonde électrochimique puis le détachement de la cartouche de l'organe de support.

L'unité de cartouche selon l'invention permet ainsi le montage de la cartouche sur la sonde électrochimique par l'utilisateur sans transvasement d'électrolyte d'une bouteille dans la cartouche. L'organe de support aide au montage de la cartouche sur la sonde électrochimique et permet d'éviter un contact direct entre l'utilisateur et la cartouche.

Dans un mode de réalisation préférentiel, l'organe de support est une boîte contenant entièrement la cartouche. Un couvercle peut être prévu pour fermer la boîte.

Avantageusement, l'organe de support comprend un espace destiné à recevoir un excès d'électrolyte de la cartouche pendant la fixation de la cartouche à la sonde électrochimique.

L'unité de cartouche peut être agencée pour que la fixation de la cartouche à l'organe de support soit obtenue par application d'un premier couple de serrage et que la fixation de la cartouche à la sonde électrochimique soit obtenue par application d'un second couple de serrage ayant nécessairement une valeur sensiblement égale à celle du premier couple de serrage.

A cet effet, l'unité de cartouche peut être agencée de telle sorte que :
- lesdits moyens de fixation à la sonde électrochimique comprennent un premier filetage,
- la cartouche comprenne un deuxième filetage coopérant avec un filetage correspondant de l'organe de support, et
- les pas des premier et deuxième filetages soient inversés.

La première extrémité de la cartouche peut comprendre un joint d'étanchéité retenu dans une gorge par la membrane, ce joint étant comprimé par une surface de l'organe de support.

La deuxième extrémité de la cartouche peut comprendre un joint d'étanchéité logé dans une gorge et comprimé par les moyens de fermeture.

De préférence, l'organe de support comprend un organe élastique exerçant une pression sur la face extérieure de la membrane. Un organe connecté aux moyens de fermeture et en appui contre la face intérieure de la membrane à l'encontre de l'action de l'organe élastique pour maintenir la membrane dans un état sensiblement non déformé peut également être prévu.

La présente invention concerne en outre un ensemble comprenant une unité de cartouche telle que définie ci-dessus et une sonde électrochimique.

Cet ensemble peut comprendre un manchon de protection apte à recevoir au moins la cartouche après qu'elle a été fixée à la sonde électrochimique, ce manchon de protection protégeant un corps de la cartouche d'un échantillon à analyser.

Avantageusement, le manchon de protection comprend un organe saillant pour comprimer ledit joint d'étanchéité retenu dans une gorge par la membrane.

D'autres caractéristiques et avantages de la présente invention apparaîtront à la lecture de la description détaillée suivante faite en référence aux dessins annexés dans lesquels :
- la figure 1 est une vue en coupe axiale d'une unité de cartouche selon l'invention, et
- les figures 2 à 6 sont des vues en coupe axiale montrant des étapes successives de montage d'une cartouche incluse dans l'unité de cartouche de la figure 1 sur une sonde électrochimique.

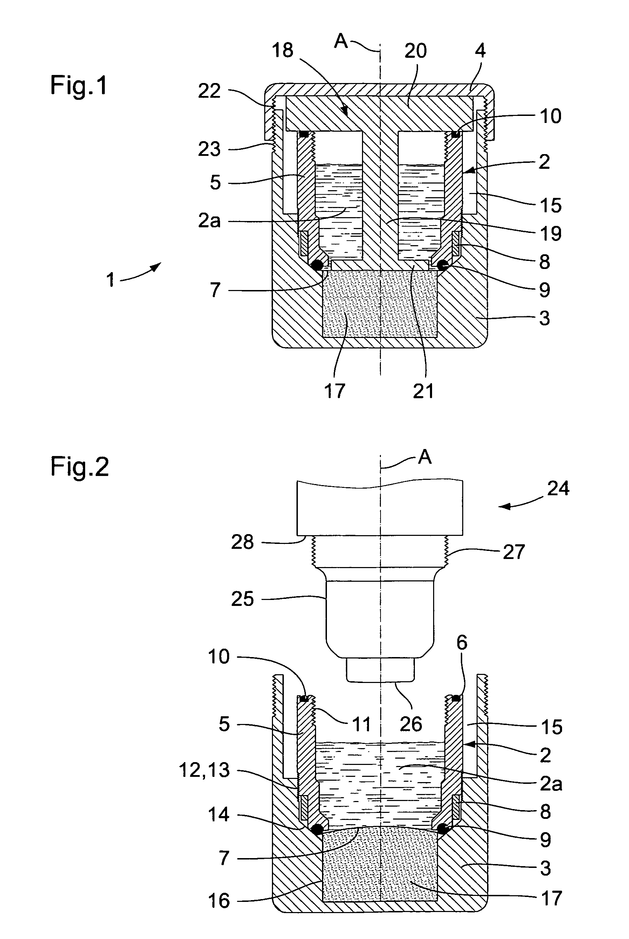

En référence aux figures 1 et 2, une unité de cartouche 1 pour sonde électrochimique selon l'invention comprend une cartouche 2 placée dans une boîte 3 fermée par un couvercle 4.

La cartouche 2 comprend un corps de cartouche creux 5, de forme générale cylindrique ou conique et ouvert à une extrémité axiale 6, et une membrane 7 qui ferme l'autre extrémité axiale du corps de cartouche 5. La membrane 7 est sélectivement perméable à une substance, telle qu'un gaz, à détecter. Une bague 8 enfilée à force sur le pourtour du corps de cartouche 5 fixe la membrane 7 à ce dernier. L'extrémité du corps de cartouche 5 où se situe la membrane 7 comporte une gorge dans laquelle se trouve un joint torique d'étanchéité 9. Le joint 9 est retenu dans la gorge par la membrane 7. Un autre joint 10, de forme annulaire dans l'exemple représenté, est disposé dans une gorge pratiquée dans l'extrémité ouverte 6 du corps de cartouche 5. Un filetage 11 est pratiqué dans la face interne du corps de cartouche 5, à proximité de l'extrémité ouverte 6. Un autre filetage 12 est pratiqué dans la face externe du corps de cartouche 5, à proximité de la membrane 7. Les pas de vis des filetages 11 et 12 sont inversés. La cartouche 2 est partiellement remplie d'une certaine quantité d'électrolyte 2a.

La boîte 3 sert de support, de moyen de stockage et d'outil de montage à la cartouche 2. La boîte 3 comporte un premier logement de même axe que l'axe commun A de la boîte 3 et de la cartouche 2 et dans lequel est vissée la cartouche 2. Ce logement est défini par une surface cylindrique filetée 13 coopérant avec le filetage externe 12 de la cartouche 2, suivie d'une surface tronconique 14 évasée vers l'extrémité ouverte 6. La cartouche 2 est bloquée axialement dans la direction du fond de la boîte 3 par la surface tronconique 14 contre laquelle s'appuie et est comprimé le joint 9. La hauteur de la boîte 3 (dimension dans la direction de l'axe A) est suffisamment grande pour que la boîte 3 dépasse l'extrémité ouverte 6 du corps de cartouche 5, en d'autres termes pour que la cartouche 2 soit complètement contenue dans la boîte 3. Axialement entre l'extrémité ouverte 6 du corps de cartouche 5 et la surface filetée 13 et radialement entre la cartouche 2 et la boîte 3 est défini un espace vide cylindrique annulaire 15.

La boîte 3 comporte en outre, à proximité de son fond, un deuxième logement 16 qui communique avec le premier logement. Le deuxième logement 16 a une forme cylindrique ou conique et est rempli d'un coussinet élastique 17, fait par exemple en mousse. Ce coussinet 17 exerce une pression sur la face extérieure de la membrane 7, c'est-à-dire la face tournée vers l'extérieur de la cartouche 2, pour tendre la membrane 7, comme montré à la figure 2.

A l'intérieur de la boîte 3 et de la cartouche 2 est placé un insert 18. L'insert 18 comprend une partie 19 allongée le long de l'axe A et terminée à ses deux extrémités par des flasques 20 et 21. La partie allongée 19 et les flasques 20, 21 sont solidaires. L'insert 18 peut être en une seule pièce, comme dans l'exemple représenté. Le flasque 21, de taille plus petite que le flasque 20, est en appui contre la face intérieure de la membrane 7 et s'oppose à la force exercée par le coussinet élastique 17 pour maintenir la membrane 7 dans un état sensiblement non déformé (figure 1). Le flasque 20 ferme la cartouche 2 en bouchant et en étant en appui contre l'extrémité ouverte 6 du corps de cartouche 5 et en comprimant le joint 10.

Le maintien de l'insert 18 dans sa position axiale montrée à la figure 1, à l'encontre de l'action du coussinet élastique 17, est assuré par le couvercle 4 qui presse contre la face extérieure du flasque 20. Le couvercle 4 est vissé à la boîte 3 par la coopération entre un filetage interne 22 du couvercle 4 et un filetage 23 pratiqué sur le pourtour de la boîte 3.

La compression des joints 9, 10 par la surface tronconique 14 et le flasque 20 permet de conserver une étanchéité élevée dans la cartouche 2, empêchant l'électrolyte de sortir de la cartouche 2. De plus, l'absence de déformation de la membrane 7 obtenue grâce au flasque 21 protège la membrane 7. En effet, sans l'insert 18 et son flasque 21, l'action constante exercée par le coussinet 17 pourrait rendre permanente la déformation de la membrane 7 après un certain temps.

On voit qu'ainsi l'unité de cartouche 1 selon l'invention comporte une cartouche 2 pré-remplie d'électrolyte. La boîte 3, le couvercle 4 et l'insert 18 permettent une conservation prolongée de la cartouche 2, sans risque de détérioration de la membrane 7 ni de fuite de l'électrolyte 2a. De plus, comme cela apparaîtra ci-dessous, du fait que la cartouche 2 est pré-remplie par le fabricant, la quantité d'électrolyte 2a dans la cartouche 2 peut être déterminée pour un fonctionnement optimal de la sonde électrochimique.

La sonde électrochimique sur laquelle la cartouche 2 est destinée à être montée est représentée schématiquement et partiellement aux figures 2 à 6 où elle est désignée par le repère 24. Cette sonde 24 comprend une tête 25 ayant une surface d'extrémité 26 de laquelle font saillie une ou plusieurs électrodes, à savoir une électrode de mesure polarisée, cathode ou anode selon la substance à détecter, et éventuellement une électrode de garde entourant l'électrode de mesure. La sonde 24 comporte en outre une deuxième électrode polarisée, anode ou cathode selon la substance à détecter. Ces électrodes, connues en soi, ne sont pas représentées sur les figures. Un morceau de cellulose peut être disposé sur la membrane 7 de la cartouche 2 entre l'électrode de mesure et la deuxième électrode polarisée pour bloquer la migration d'ions d'argent provenant de la deuxième électrode polarisée, de façon connue en soi. Un filetage 27 est pratiqué sur le pourtour de la tête 25 de la sonde 24. Ce filetage 27 est destiné à coopérer avec le filetage interne 11 de la cartouche 2.

Le mode de fixation de la cartouche 2 à la sonde 24 va maintenant être décrit en référence aux figures 2 à 6.

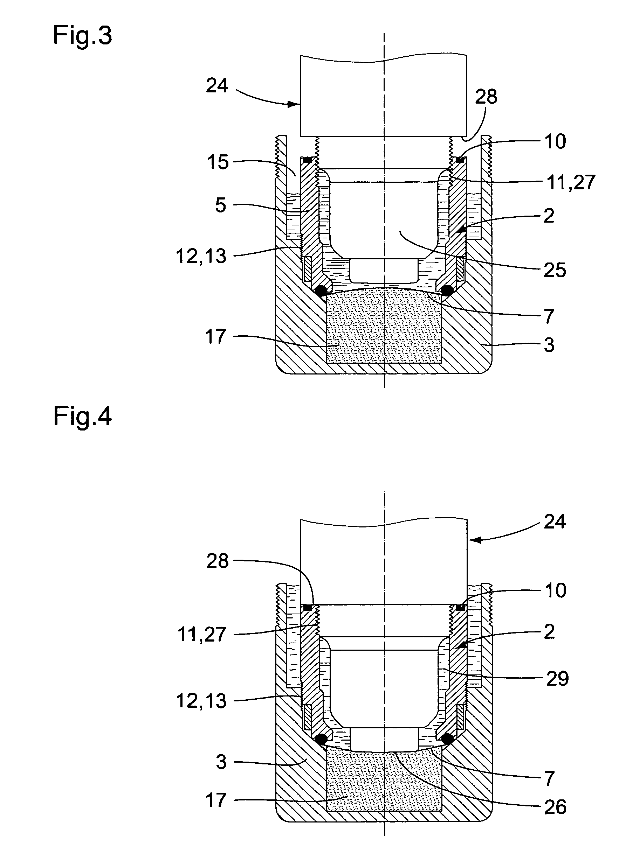

Tout d'abord, le couvercle 4 et l'insert 18 sont retirés, ce qui ouvre la boîte 3 et la cartouche 2 (figure 2). Ensuite, la tête 25 de la sonde électrochimique 24 est introduite dans la cartouche 2 et vissée dans cette dernière par la coopération des filetages 11 et 27 (figure 3). Pendant ce vissage, un excès d'électrolyte est évacué de la cartouche 2 par l'extrémité ouverte 6 à travers les filetages 11, 27 pour retomber dans l'espace annulaire 15 entre la paroi de la boîte 3 et la cartouche 2. Des passages (non représentés) fermés par une valve et communiquant avec l'espace 15 peuvent être pratiqués à travers la paroi du corps de cartouche 5 pour faciliter l'évacuation de l'excès d'électrolyte. Le vissage de la tête 25 de la sonde dans la cartouche 2 est effectué jusqu'à un point où un épaulement 28 de la sonde bute contre l'extrémité ouverte 6 de la cartouche 2 en comprimant le joint 10 (figure 4). A ce point, la cartouche 2 est fermée hermétiquement par la sonde 24. De plus, l'espace intérieur 29 entre la sonde 24 et la cartouche 2 est entièrement rempli d'électrolyte, en d'autres termes l'intérieur de la cartouche 2 ne contient plus d'air, condition importante pour un bon fonctionnement de la sonde 24. A ce point également, la surface d'extrémité 26 de la sonde 24 exerce une pression sur la face intérieure de la membrane 7 ce qui tend cette dernière en comprimant le coussinet élastique 17. Bien que cela ne soit pas visible à la figure 4, un film d'électrolyte est interposé entre la ou les électrodes de la surface d'extrémité 26 de la sonde 24 et la membrane 7. La pression exercée par le coussinet élastique 17 assure le placage de la membrane 7 contre cette ou ces électrodes (par l'intermédiaire du film d'électrolyte). La deuxième électrode polarisée de la sonde 24 est elle aussi en contact avec l'électrolyte.

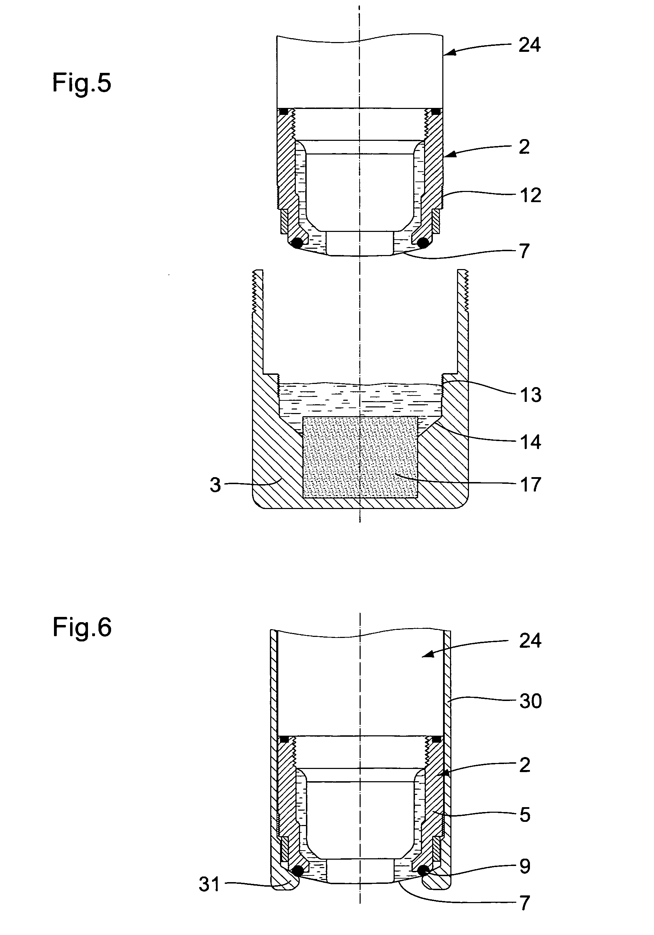

Comme le pas des filetages 11, 27 est inversé par rapport à celui des filetages 12, 13, un couple supplémentaire appliqué à la sonde 24 dans le sens du vissage de la sonde 24 dans la cartouche 2 entraîne le dévissage de la cartouche 2 de la boîte 3 (cf. figure 5). Cela permet d'une part de sortir la cartouche 2 de la boîte 3 de façon aisée et sûre pour l'utilisateur et d'autre part d'obtenir que le couple de serrage de la cartouche 2 sur la sonde 24, produit par l'utilisateur, soit nécessairement égal à une valeur déterminée, à savoir le couple de serrage de la cartouche 2 dans la boîte 3, produit lui par le fabricant de l'unité de cartouche 1. Une fixation fiable de la cartouche 2 sur la sonde 24 peut ainsi être garantie.

Après l'étape illustrée à la figure 5, la boîte 3 contenant l'excès d'électrolyte est jetée. La sonde 24, ou au moins la cartouche 2, est introduite dans un manchon de protection 30, par exemple métallique, permettant d'isoler la matière constituant le corps de cartouche 5, et plus généralement tous les éléments constitutifs de la cartouche 2 excepté la membrane 7, de l'échantillon à analyser (figure 6). Ainsi, la sonde 24 ne présente pas de recoin où des substances pourraient s'accumuler et provoquer le développement de micro-organismes. Le manchon 30 est fixé sur la sonde 24 par exemple par un collier de serrage (non représenté). Le manchon 30 comporte un rebord annulaire intérieur 31 qui comprime le joint torique 9 pour assurer l'étanchéité de la cartouche 2. La sonde 24 telle qu'illustrée à la figure 6 est prête à l'emploi. Lorsque cela sera souhaité, la cartouche 2 pourra être détachée facilement de la sonde 24 en retirant le manchon de protection 30 puis en dévissant la cartouche 2, par exemple au moyen d'un outil identique ou comparable à la boîte 3.

## Revendications

1. Unité de cartouche pour une sonde électrochimique, comprenant :
- une cartouche (2) pré-remplie d'électrolyte, comprenant une première extrémité fermée par une membrane sélectivement perméable (7), une deuxième extrémité (6) et des moyens (11) de fixation à la sonde électrochimique (24),
- un organe de support (3) auquel est fixée la cartouche (2) de manière amovible,
- des moyens (4, 20) de fermeture de la deuxième extrémité (6) de la cartouche (2), ces moyens de fermeture (4, 20) pouvant être ouverts par un utilisateur pour permettre la fixation de la cartouche (2) à la sonde électrochimique (24) puis le détachement de la cartouche (2) de l'organe de support (3).

2. Unité de cartouche selon la revendication 1, dans laquelle l'organe de support (3) est une boîte contenant entièrement la cartouche (2).

3. Unité de cartouche selon la revendication 2, comprenant un couvercle (4) pour fermer la boîte (3).

4. Unité de cartouche selon l'une quelconque des revendications 1 à 3, dans laquelle l'organe de support (3) comprend un espace (15) destiné à recevoir un excès d'électrolyte de la cartouche (2) pendant la fixation de la cartouche (2) à la sonde électrochimique (24).

5. Unité de cartouche selon l'une quelconque des revendications 1 à 4, agencée pour que la fixation de la cartouche (2) à l'organe de support (3) soit obtenue par application d'un premier couple de serrage et que la fixation de la cartouche (2) à la sonde électrochimique (24) soit obtenue par application d'un second couple de serrage ayant nécessairement une valeur sensiblement égale à celle du premier couple de serrage.

6. Unité de cartouche selon la revendication 5, dans laquelle :
- lesdits moyens de fixation à la sonde électrochimique (24) comprennent un premier filetage (11),
- la cartouche (2) comprend un deuxième filetage (12) coopérant avec un filetage correspondant (13) de l'organe de support (3), et
- les pas des premier et deuxième filetages (11, 12) sont inversés.

7. Unité de cartouche selon l'une quelconque des revendications 1 à 6, dans laquelle la première extrémité de la cartouche (2) comprend un joint d'étanchéité (9) retenu dans une gorge par la membrane (7), ce joint (9) étant comprimé par une surface (14) de l'organe de support (3).

8. Unité de cartouche selon l'une quelconque des revendications 1 à 7, dans laquelle la deuxième extrémité (6) de la cartouche (2) comprend un joint d'étanchéité (10) logé dans une gorge et comprimé par les moyens de fermeture (20).

9. Unité de cartouche selon l'une quelconque des revendications 1 à 8, dans laquelle l'organe de support (3) comprend un organe élastique (17) exerçant une pression sur la face extérieure de la membrane (7).

10. Unité de cartouche selon la revendication 9, comprenant en outre un organe (21) connecté aux moyens de fermeture (20) et en appui contre la face intérieure de la membrane (7) à l'encontre de l'action de l'organe élastique (17) pour maintenir la membrane (7) dans un état sensiblement non déformé.

11. Ensemble comprenant une unité de cartouche (1) selon l'une quelconque des revendications 1 à 10 et une sonde électrochimique (24).

12. Ensemble selon la revendication 11, comprenant en outre un manchon de protection (30) apte à recevoir au moins la cartouche (2) après qu'elle a été fixée à la sonde électrochimique (24), ce manchon de protection (30) protégeant un corps (5) de la cartouche (2) d'un échantillon à analyser.

13. Ensemble selon la revendication 12, dans lequel l'unité de cartouche est telle que définie dans la revendication 7 ou l'une quelconque des revendications 8 à 10 lorsqu'elle dépend de la revendication 7, et dans lequel le manchon de protection (30) comprend un organe saillant (31) pour comprimer ledit joint d'étanchéité (9) retenu dans une gorge par la membrane (7).
